# EUROPEAN PATENT SPECIFICATION

(11) **EP 3 541 703 B1**
(45) Date of publication and mention of the grant of the patent: **24.08.2022**
(21) Application number: 16921636.3
(22) Date of filing: 18.11.2016
(51) Int. Cl.: B64D 11/00, E05B 53/00, E05C 1/12, E05C 9/10, E05B 5/00, E05B 41/00, E05B 63/14, E05C 3/04

(54) **OVERHEAD STORAGE BIN LATCH SYSTEM**
ÜBERKOPFGEPÄCKABLAGEVERRIEGELUNGSSYSTEM
SYSTÈME DE VERROU POUR COMPARTIMENT DE RANGEMENT SUPÉRIEUR

(43) Date of publication of application: 25.09.2019
(73) Proprietor: C&D Zodiac, Inc., Huntington Beach, CA 92647 (US)
(72) Inventor: LONG, Eric, Huntington Beach CA 92647 (US); KEARSEY, Stephen, Huntington Beach CA 92647 (US); SAVIAN, Scott, Huntington Beach CA 92647 (US)
(74) Representative: Marks & Clerk LLP
(86) International application number: PCT/US2016/062897
(87) International publication number: WO 2018/093382

(56) References cited:
- WO-A1-2013/123070
- US-A- 4 917 420
- US-A1- 2011 253 837
- US-A1- 2016 114 889
- US-A1- 2016 114 889
- US-B1- 6 547 291
- US-B2- 7 552 954
- US-B2- 7 857 362
- US-B2- 7 857 362
- US-B2- 8 534 718
- US-B2- 8 939 473

## Description

### FIELD OF THE INVENTION

The present invention relates generally to a latch system, and more particularly to a latch system for an aircraft overhead storage bin.

### BACKGROUND OF THE INVENTION

Overhead storage bins in aircraft typically include latching systems to secure the pivotal bucket to the upper housing. However, many latch systems have proven unreliable. Accordingly, a need exists for an improved latch system.

US2016114889 (KEARSEY STEPHEN [US], et al), entitled OVERHEAD STORAGE BIN LATCH SYSTEM, according to its abstract relates to a latch system that includes a paddle button assembly having a button that is movable between a home position and an actuation position, a first latch assembly that includes a first striker assembly and a first hook assembly, and a first cable that extends between the paddle button assembly and the first latch assembly. Movement of the button from the home position to the actuation position moves the first cable, thereby disengaging the first hook assembly and the first striker assembly.

US8939473 (COSTABEL SASCHA [DE], et al), entitled Locking mechanism for a housing and lock suitable therefor, according to its abstract relates to a locking mechanism and a lock. The locking mechanism comprises a push-button connected to a freewheel via a traction cable, with the freewheel being connected to a drive device of the lock. A baggage compartment in the cabin of an airplane usually comprises two locks of this type which can be unlocked by the push-button. A freewheel arranged between the push-button and the lock ensures that the push-button remains in a pushed position as long as each lock allocated to the baggage compartment is not in a correctly locked position. It can be identified from the position of the push-button of the baggage compartment whether both locks of the baggage compartment are correctly snapped in.

US2011253837 (LEE NICK [US], et al), entitled PIVOT BIN ASSEMBLY, according to its abstract relates to a bin assembly that includes a bin housing and a bin that is pivotal between an open and a closed position within the bin housing. The bin housing includes a forward bulkhead panel, aft bulkhead panel and an aft housing panel that includes a rigid valence panel having one of a latch striker or a latch assembly secured thereto. The rigid valence panel has opposite ends that are secured to the forward and aft bulkhead panels. The bin includes an aft wall, a forward wall, a bin bottom and the other of a latch striker or a latch assembly secured to the bin bottom, thereby defining a latching location. A downward load in the bin is distributed from the latching location, along the rigid valence panel and to the aft and forward bulkhead panels.

WO2013123070 (C & D ZODIAC INC [US]), entitled PIVOT BIN ASSEMBLY, according to its abstract relates to a pivot bin assembly configured to receive luggage and be positioned in the interior of an aircraft. The pivot bin assembly includes an upper housing that includes a strongback and first and second side panels, a bucket that cooperates with the upper housing to define a bin interior, a first pivot mechanism operatively associated, with the first side panel and the bucket, and a second pivot mechanism operatively associated, with the second side panel and the bucket. The first and second pivot mechanisms are axially aligned along and are rotatable about a pivot axis such that the bucket pivots about the pivot axis with respect to the upper housing between an open position and a closed position.

US7857362 (DEBLOCK LUC [FR]), entitled Lock for two-notch locking bolt comprising a single switch, according to its abstract relates to a lock for an opening panel. The lock includes a rotary bolt with first and second locking notches, a strike which can be engaged in the bolt in order to lock the opening panel, a retaining pawl including at least one tooth which co-operates with the locking notches of the bolt in order to lock same in relation to the first or second locking notch, and a switch which is controlled with a control lever. The switch has two states which indicate if the lock is open or closed. In addition, the switch includes a mechanical element which co-operates with the control lever when the lock is closed, such that the switch indicates that the lock is closed only when the tooth of the retaining pawl co-operates with the second locking notch of the bolt. The mechanical element includes a pawl which maintains the control lever in position, thereby preventing the switch from changing from the first state to the second state.

### SUMMARY OF THE PREFERRED EMBODIMENTS

In accordance with a first aspect of the present invention there is provided an aircraft storage bin that includes an upper housing that includes first and second side panels, a bucket that cooperates with the upper housing to define a bin interior, and a latch system. The bucket is movable with respect to the upper housing between an open position and a closed position and includes a bottom and first and second side walls. The latch system includes a paddle button assembly having a button that is movable between a home position and an actuation position, a latch assembly that includes a hook assembly and a striker assembly, and a cable that extends between the paddle button assembly and the latch assembly. The paddle button assembly is associated with one of the bucket and the upper housing. The hook assembly is associated with one of the bucket and the upper housing and the striker assembly is associated with the other of the bucket and the upper housing. Movement of the button from the home position to the actuation position moves the cable, thereby disengaging the hook assembly and the striker assembly, thereby causing the bucket to move from the closed position to the open position.

The hook assembly includes a hook and the striker assembly includes a striker.

Movement of the cable moves one of the hook and the striker to disengage the hook assembly and the striker assembly.

Preferably, the button is pivotal between the home position and the actuation position.

Movement of the button pushes or pulls the cable, thereby disengaging the hook from the striker assembly.

In a preferred embodiment, the hook assembly includes a rotary member that includes the hook. The rotary member is movable between a first position where the hook is engaged with the striker and a second position where the hook is not engaged with the striker. Preferably, the rotary member is biased toward the second position. In a preferred embodiment, the rotary member includes a catch member that engages a ledge on the trigger arm in the first positon. In a preferred embodiment, the hook assembly includes a stop member and the rotary member engages the stop member in a second position. The rotary member is preferably enclosed in a housing and includes a closeout member. The housing includes a striker opening defined in a top wall thereof and the first closeout member is positioned to block the striker opening when the rotary catch is in the second position.

The hook assembly includes an indicator that is movable from a first position to a second position when the trigger arm is moved from the engaged position to the disengaged position. The indicator is enclosed in a housing and extends outwardly from the housing when in the second position. The housing is a hook assembly housing that defines a housing interior that houses the components of the hook assembly.

In a preferred embodiment, the button is pivotal between the home position and the actuation position, and pivoting of the button pivots a cam member that pushes or pulls the cable, thereby disengaging the hook from the striker. Preferably, the cam member includes a cam post extending outwardly therefrom that engages a cam surface on the button, and the cam post moves along the cam surface when the button pivots from the home position to the actuation position.

In accordance with another embodiment of the present invention there is provided a latch system that includes a paddle button assembly having a button that is movable between a home position and an actuation position, a latch assembly that includes a striker assembly and a hook assembly, and a cable that extends between the paddle button assembly and the latch assembly. Movement of the button from the home position to the actuation position moves the cable, thereby disengaging the hook assembly and the striker assembly.

The hook assembly includes a hook and the striker assembly includes a striker, and wherein movement of the cable causes movement of one of the hook and the striker to disengage the hook assembly and the striker assembly. Movement of the button pushes or pulls the cable, thereby pivoting a trigger arm from an engaged position to a disengaged position and disengaging the hook from the striker. The hook assembly includes an indicator that is movable from a first position to a second position when the trigger arm is moved from the engaged position to the disengaged position. The indicator is enclosed in a housing, wherein the indicator extends outwardly from the housing when in the second position. The housing is a hook assembly housing that defines a housing interior that houses the components of the hook assembly.

Preferably, the button is pivotal between the home position and the actuation position and the pivoting of the button pivots a cam member that pushes or pulls the cable, thereby disengaging the hook from the striker

### BRIEF DESCRIPTION OF THE DRAWINGS

The invention may be more readily understood by referring to the accompanying drawings in which:
FIG. 1 is a perspective view of an exemplary latch system;
FIG. 2 is a perspective view of a dual pivot bin assembly with the latch system of FIG. 1 incorporated therein;
FIG. 3 is a perspective view of the bucket of the a dual pivot bin assembly with the latch system of FIG. 1 incorporated therein;
FIG. 4 is a perspective view of the paddle button assembly of the latch system of FIG. 1;
FIG. 5 A is a cross-sectional view of the paddle button assembly with the button in the home position;
FIG. 5B is a cross-sectional view of the paddle button assembly with the button in the actuation position;
FIG. 6 is an elevational view of the latch assembly of the latch system of FIG. 1 with a portion of the housing removed and with the hook assembly and the striker assembly engaged with one another;
FIG. 7 is an elevational view of the latch assembly of the latch system of FIG. 1 with a portion of the housing removed and with the hook assembly and the striker assembly disengaged from one another;
FIG. 8 is a cross-sectional view of the paddle button assembly with the indicator in the second position and the button in the home position;
FIG. 9A is a perspective view of the paddle button assembly on the bucket with the indicator in the first position; and
FIG. 9B is a perspective view of the paddle button assembly on the bucket with the indicator in the second (indication) position;
FIG. 10 is a perspective view of a latch system in accordance with a preferred embodiment of the present invention;
FIG. 11 is a perspective view of a dual pivot bin assembly with the latch system of FIG. 10 incorporated therein;
FIG. 12 is a perspective view of the bucket of the dual pivot bin assembly with the latch system of FIG. 10 incorporated therein;
FIG. 13 is an exploded perspective view of the paddle button assembly of the latch system of FIG. 10;
FIG. 14A is a front elevational view of the paddle button assembly with the button in the home position;
FIG. 14B is a front elevational view of the paddle button assembly with the button in the actuation position;
FIG. 15 is a perspective view of the latch assembly of the latch system of FIG. 10 with a portion of the housing removed, with the hook assembly and the striker assembly engaged with one another and the indicator and manual override switch in the first position;
FIG. 16 is a perspective view of the latch assembly of the latch system of FIG. 10 with a portion of the housing removed, with the hook assembly and the striker assembly disengaged from one another and the indicator and manual override switch in the second position; and
FIG. 17 is a perspective view showing the indicator and manual override switch in the second (indication) position.

Like numerals refer to like parts throughout the several views of the drawings.

### DETAILED DESCRIPTION OF THE PREFERRED EMBODIMENTS

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are references to the same embodiment; and, such references mean at least one of the embodiments.

Reference in this specification to "one embodiment" or "an embodiment" means that a particular feature, structure, or characteristic described in connection with the embodiment is included in at least one embodiment of the-disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks: The use of highlighting has no influence on the scope and meaning of a term; the scope and meaning of a term is the same, in the same context, whether or not it is highlighted.

It will be appreciated that the same thing can be said in more than one way. Consequently, alternative language and synonyms may be used for any one or more of the terms discussed herein. No special significance is to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification. The scope of the invention is defined by the appended claims.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. The scope of the invention is defined by the appended claims. Unless otherwise defined, all technical and scientific terms used herein have the same meaning as commonly understood by one of ordinary skill in the art to which this disclosure pertains. In the case of conflict, the present document, including definitions, will control.

It will be appreciated that terms such as "front, " "back," "top," "bottom," "side," "short," "long, " "up," "down," "aft," "forward," "inboard," "outboard" and "below" used herein are merely for ease of description and refer to the orientation of the components as shown in the figures. It should be understood that any orientation of the components described herein is within the scope of the present invention as defined by the claims.

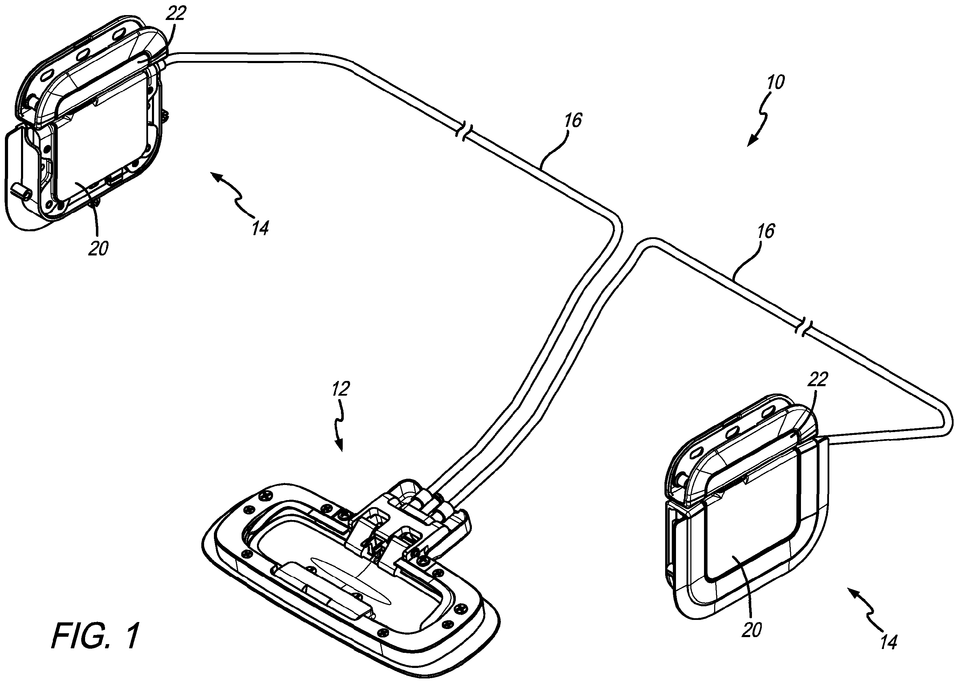

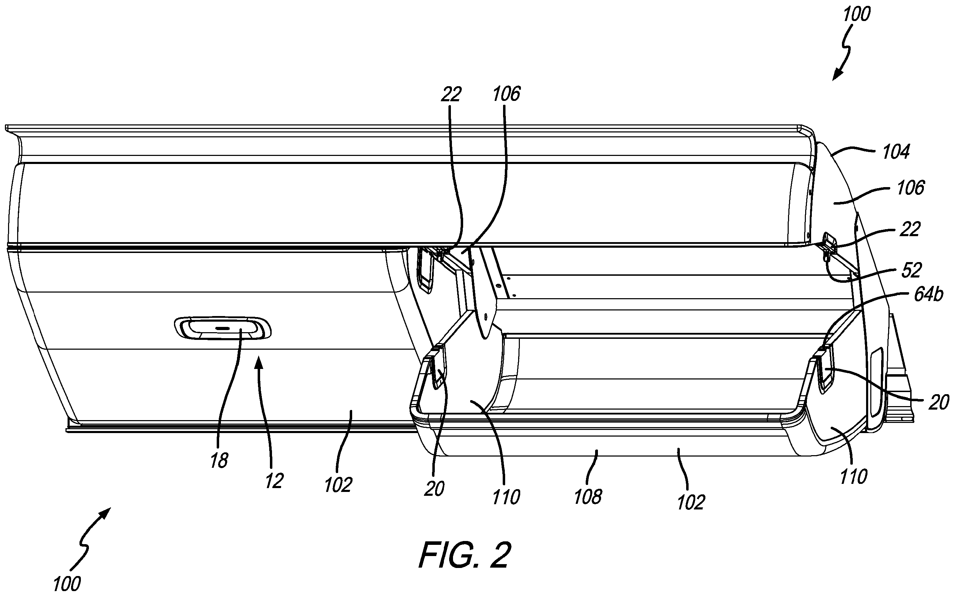

Referring now to the drawings, wherein the showings are for purposes of illustrating the present invention and not for purposes of limiting the same, FIGS. 1-9B show an exemplary latch system 10. The latch system 10 can be used elsewhere. As shown in FIG. 1, generally, the latch system 10 includes a paddle button assembly 12, first and second latch assemblies 14 and first and second cables 16 extending between the paddle button assembly 12 and the first and second latch assemblies 14. As shown in FIG. 2, the latch system 10 can be used with a pivot bin assembly 100, such as those used in commercial passenger aircraft. The latch system 10 can be used elsewhere. Preferably, the latch system 10 is used with an aircraft storage bin 100 that includes a bucket 102 that is pivotally connected to an upper housing 104. Preferably, the upper housing 104 includes first and second side panels 106. The bucket 102 cooperates with the upper housing to define a bin interior and is movable with respect to the upper housing 104 between an open position and a closed position. The bucket 102 may include a bottom 108 and first and second side walls 1 10. The bucket can also include a top. For example, see the bucket taught in U. S. Patent Publication No. 2011/0253837, published on October 20, 2011 (the " '837 publication").

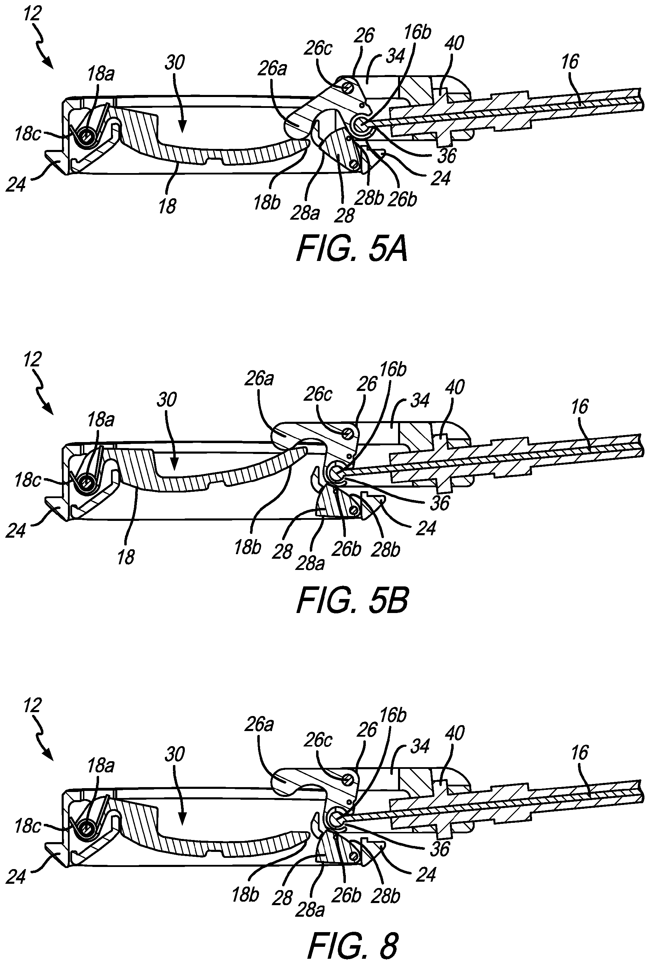

As shown in FIG. 1, the paddle button assembly 12 includes a button 18 that is movable between a home position and an actuation position (see FIGS. 5A and 5B), the first and second latch assemblies 14 includes a first hook assembly 20 and a first striker assembly 22, and the first and second cables 16 extends between the paddle button assembly 12 and the first and second latch assemblies 14. The first and second latch assemblies 14 can be associated with the side panels and side walls of the upper housing 104 and bucket 102 or they can be associated with the front of the upper housing 104 and bucket 102. It will be appreciated that only a single latch assembly 14 can be utilized (on one side or in the middle of the bucket and upper housing).

As shown in FIG. 2, the paddle button assembly 12 is associated with or mounted on or in the bucket 102. However, in another example, the paddle button assembly 12 can be associated with or mounted on or in the upper housing. In a preferred example, the first and second hook assemblies 20 are associated with one of the bucket 102 and the upper housing 104 and the first and second striker assemblies 22 are associated with the other of the bucket 102 and the upper housing 104. The drawings show the hook assemblies 20 mounted in the side walls 110 of the bucket 102 and the striker assemblies 22 mounted in and extending downwardly from the side panels 106 of the upper housing 104. However, this arrangement can be reversed. In the example shown in the drawings, the hook and striker assemblies 20 and 22 are generally aligned with the side walls and side panels, which allows the clamshell type bin to close. However, in another example, the hook and striker assemblies 20 and 22 can be mounted on the inside of outside of the side walls or side panels. For example, if the latch system 10 was used with the pivot bin assembly taught in the '837 publication, the striker assemblies 142 could be mounted on the inner surfaces the side panels of the stationary upper housing and the hook assemblies 140 could be mounted on the outer surfaces of the side walls of the pivoting bin or vice versa.

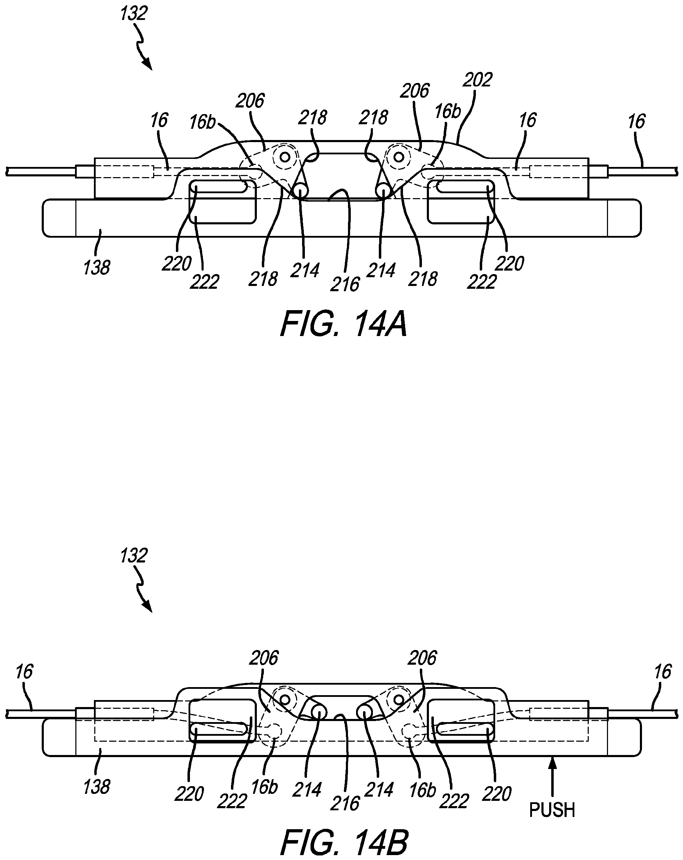

Generally, movement of the button 138 from the home position (see FIG. 14 A) to the actuation position (see FIG. 14B) moves the cables 16, thereby disengaging the hook assemblies 140 and the striker assemblies 142, thereby allowing the bucket to move from the closed position to the open position. This arrangement will be further described below.

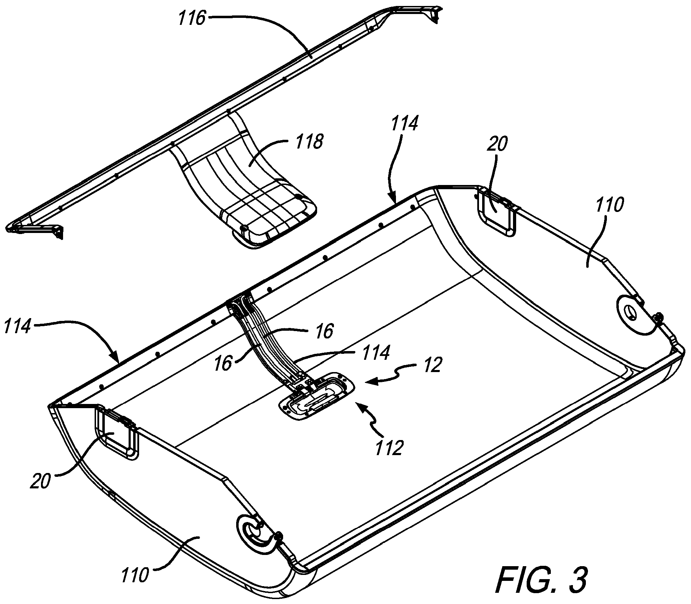

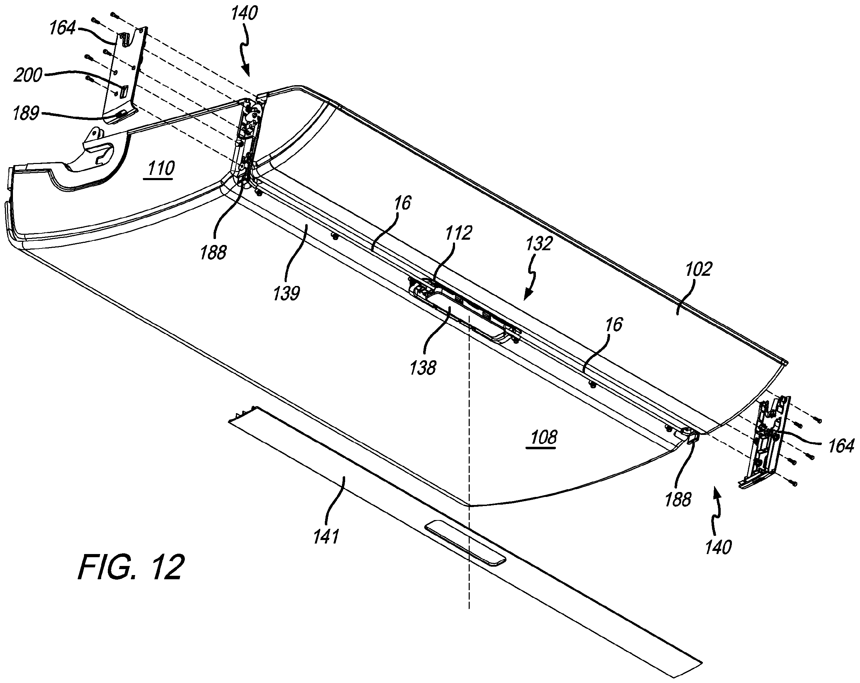

As shown in FIG. 12, in a preferred embodiment, paddle button assembly 132 is mounted in an opening 112 defined in the bottom 108 of the bucket 102. The cables 16 extend through a channel 114 defined in either the bucket 102, between the bucket 102 and trim 116 or in the trim. FIG. 3 shows the first portion of the channel 114 extending away from the paddle button assembly 12 defined in the bucket and covered by a cover 118 (which is exploded away) and the second portion of the channel 114 defined in the top of the front and side edges of the bucket 102 and to the striker assemblies 22. In another embodiment, the first portion of the channel 114 extends away from the paddle button assembly 12 and is defined in the bucket and covered by the cover 118 and the second portion of the channel 114 is defined between the top of the front and side edges of the bucket 102 and the inner surface of the trim 116. The cables 16 can be exposed or contained in an outer casing 17, similar to cables used for braking on bicycles. The bucket 102 can also includes the cover 118 that is mounted to an inside surface thereof for covering the paddle button assembly 12, cables 16 and associated components.

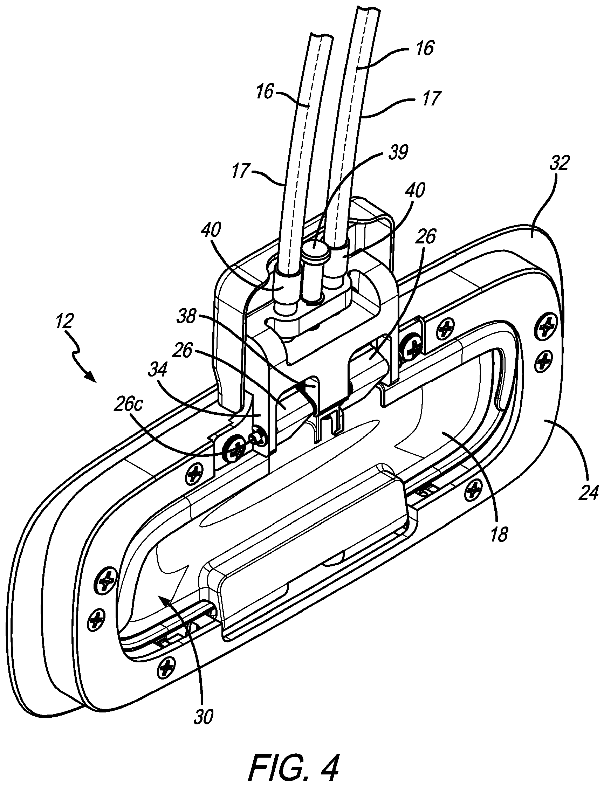

The paddle button assembly 12, which is best shown in FIGS. 4-5B, will now be described. Generally, the paddle button assembly 12 includes a frame 24, the button 18, first and second cam members 26, and an indicator 28 (described below). The frame 24 defines a central opening 30 that at least partially receives the button 18 and has an outer flange 32 that is mounted against the outside surface of the bucket 102. The button 18 is pivotally connected to the frame 24 (preferably by a pivot pin 18a that extends through associated openings in the frame 24 and button 18). The frame 24 also includes a hinge portion 34 that the cam members 26 are pivotally connected to. The hinge portion 34 can be integral with the frame 24 or a separate component.

As is best shown in FIGS. 5A-5B, the cam members 26 are generally "L" shaped and include a button engaging end 26a and a cable engaging end 26b. Preferably, the cable engaging end 26b includes an opening 36 that receives a ball 16b on the end of the cable 16. However any attachment of the cables 16 to the cable engaging ends 26b of the cam members 26 is possible. The cam members 26 are preferably received in recesses 38 in the hinge portion 34 and are pivotal with respect to the hinge portion 34 (preferably by pivot pins 26c that extends through associated openings in the hinge portion 34 and button cam members 26).

As shown in FIG. 5A, the end 18b of the button 18 distal from the pivot point is engaged with the button engaging ends 26b of the cam members 26 (only one cam member is shown in FIG. 5A). FIG. 5A demonstrates the home position, which, as described below is associated with the engaged position of the first trigger arm and, ultimately, the closed position of the bin. To open the bin, a user pushes on button 18, which, pivots to the actuation position (shown in FIG. 5B). In a preferred example, the button 18 is biased toward the home position. This can be done by a spring 18c. The distal end 18b of the button 18 pushes the button engaging ends 26a of the cam members 26, thereby pivoting the cam members 26 from a first position (shown in FIGS. 4 and 5A) to a second position (shown in FIG. 5B). The cam members 26 pulls the cables 16 (within casings 17), which ultimately disengages the hook assemblies 20 and the striker assemblies 22, which will be more fully described below. In another example, the button 18 and cam member 26 are oriented to push the cable 16.

In a preferred example, the cables 16 include the capability of being adjusted. This can be useful as the cables may stretch or lengthen over time. In a preferred embodiment, as shown in FIGS. 4-5B, the paddle button assembly 12 includes an adjustment lock 39 and adjustment nuts 40. The adjustment nuts 40 are similar to those used on bicycle brakes and or shifters. The adjustment lock 39 prevents the adjustment nuts 40 from turning when in the locked position and allows turning of the nuts (and, therefore, adjustment) when unlocked.

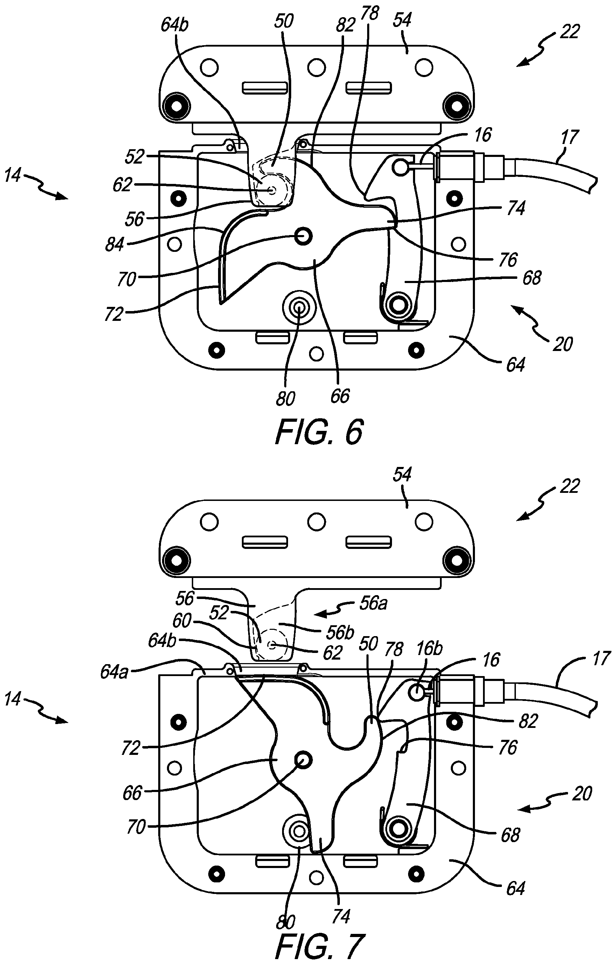

The latch assemblies 14, one of which is shown in FIGS. 6 and 7, will now be described. Generally, the hook assembly 20 includes a hook 50 that engages a striker 52 on the striker assembly 22. When the hook 50 and striker 52 are engaged, the bucket is in the closed position. When the hook 50 and striker 52 are disengaged (by actuation of the button 18), the bucket moves to the open position.

As shown in FIGS. 6 and 7, the striker assembly 22 includes a casing 54 that is secured to the upper housing 104 and includes a striker housing 56 extending downwardly therefrom. The striker housing 56 defines a housing interior 58. The striker 52 comprises a bushing 60 that is rotatably received on a pin 62 that spans the housing interior. In a preferred example, the striker housing 56 includes three sides, thereby defining a fourth side opening 56a that, together with the striker 52 defines a hook opening 56b into which the hook 50 is received.

In a preferred example, the hook assembly 20 includes a housing 64 that defines a housing interior that houses the other components. In a preferred example, the housing 64 is received in an opening in the side wall 110 of the bucket 102. The housing 64 includes a top wall 64a that has a striker opening 64b defined therein. Inside the housing 64, the hook assembly 20 includes a rotary member 66 and a pivotal trigger arm 68. The rotary member 66 is rotatably mounted on a pivot axle 70 and includes the hook 50 a closeout member 72 and a catch member 74. The rotary member 66 is rotatable between a first position (see FIG. 6) and a second position (see FIG. 7) and is biased toward the second position (preferably by a torsion spring that is concentric with the pivot pin). The trigger arm 68 is pivotally mounted to a pivot axle and includes a ledge 76 and a ramp portion 78. The trigger arm is pivotal between an engaged position and a disengaged position and is biased toward the engaged position (preferably by a torsion spring that is concentric with the pivot pin).

As shown in FIG. 6, when the rotary member 66 is in the first position, the hook 50 is engaged with the striker 52 and the catch member 74 is engaged with the ledge 76 on the trigger arm 68. In this position, the hook 50 and striker 52 are engaged and the bucket is held in the closed position. When the cable 16 is pulled, as described above, the cable 16 pivots the trigger arm 68 to the disengaged position. In this position, the catch member 74 disengages from the ledge 76, and the rotary member 66 rotates to the second position (due to the bias). In a preferred example, the catch member 74 engages a stop member 80, thereby preventing further rotation of the rotary member 66. As is shown in FIG. 7, when the rotary member 66 is in the second position, the closeout member 72 is aligned with the striker opening 64b in the top wall 64a of the housing 64. It will be understood that this serves two purposes. First, it prevents objects from entering the striker opening 64b. Second, it is part of the process for rotating the rotary member 66 back to the first position when the bucket is closed. In use, when the bucket is pivoted upwardly, the striker 52 enters the striker opening 64b and engages or contacts the closeout member 72. Because the closeout member 72 is offset from the pivot point of the rotary member 66, the engagement of the striker with the closeout member 72 causes the rotary member 66 to start to rotate toward the first position. The closeout member 72 includes a curved surface 84 that the striker 52 continues to push in to finish the rotation to the first position, thereby engaging the hook 50 with the striker 52.

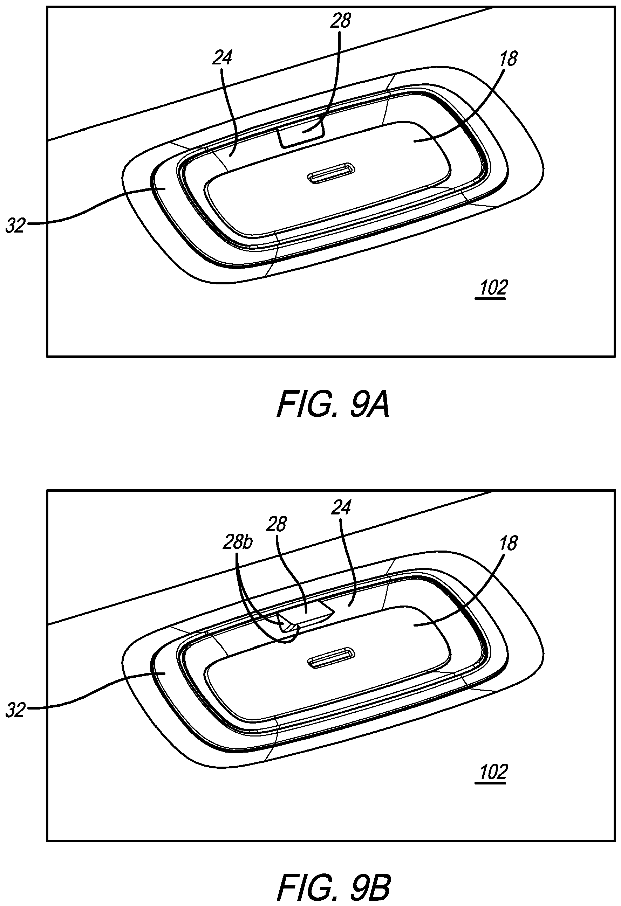

As shown in FIGS. 5A-5B and FIGS. 8-9B, in a preferred example, the paddle button assembly 12 includes an indicator 28 that is pivotally connected to the frame 24 (by a pivot pin) 29 and housed in an opening therein. The indicator 28 generally has a wedge shaped cross-section and is pivotal between a first position (see FIGS. 5 A and 9 A) where an outer surface 28a is flush with the outside surface of the flange 32 and a second position, where the side surfaces 28b are exposed. The indicator 28 is preferably biased toward the first position. The indicator 28 indicates when one or both of the hooks 50 are not engaged with the strikers 52.

As shown in FIG. 5A, in the first position, the inner surface 28b of the indicator 28 is biased against both cable engaging ends 26b of the cam members 26. In use, when the button 18 is pivoted from the home position to the actuation position (as shown in FIG. 5B), the cam members 26 pivot and the cam engaging end 26b pivots the indicator 28 to the second position, thereby indicating that the hook 50 is not engaged with the striker 52. As is described above, when the cables 16 are pulled, the trigger arms 68 are pivoted from the engaged to the disengaged position, which causes the rotary members 66 to rotate from the first to the second position. It will be appreciated that as the rotary members 66 rotate to the second position, inclined surfaces 82 on the hooks 50 engage the ramp portions 78 of the trigger arms 68, which pivot the trigger arms 68 to the disengaged position and holds them there even after the button 18 has pivoted back to the home position. This action pushes the cables 16, which, in turn holds the cam members 26 and the indicator 28 in their respective second positions, as is shown in FIGS. 8 and 9B. During latching of the hooks 50 and strikers 52, when the trigger arms 68 are both moved to the engaged position, the cables 16 are pulled, thereby pivoting the cam members 26 and the indicator 28 to their respective first positions, as is shown in FIGS. 5A and 9A. It will be understood that if the bucket is closed improperly and only one of the first and second latch assemblies is latched (i.e., one of the strikers is not engaged with its hook), the cam member 26 associated with the unlatched latch assembly will hold the indicator in the second position, thereby indicating that something is wrong. In a preferred example the side surfaces 28b of the indicator are a bright color. Therefore, when the bucket is in the closed position, but one of the latches is not properly latched a user (e.g., a flight attendant) will see that the indicator is in the position shown in FIG. 9B and can address the situation.

It will be appreciated that modifications can be made to the present invention. For example, the cable can be operably engaged with the hook and configured to pivot or rotate the hook to move the hook from a first to a second position and out of engagement with the striker. In this embodiment, the hook is biased toward the first position. To reengage the hook and striker, the hook includes an inclined surface thereon that is engaged by the striker to push the hook to the second position. Then after the striker clears the inclined surface the hook is biased back to the first position and into engagement with the striker. In this embodiment, the hook would act similar to the trigger arm in the current drawings. In the claims this embodiment may be covered by referring to the hook as a trigger arm. In another embodiment, the cable can be configured to pull or push the striker out of engagement with the hook. In another embodiment, the configuration of the button can be reversed so that the button is pulled to pivot and operate the cam members. In another embodiment, the cable is directly connected to the button so that pivoting the button pulls or pushes the cable to operate the latch. In another embodiment, the button is pushed in a linear direction to push the cable to operate the latch.

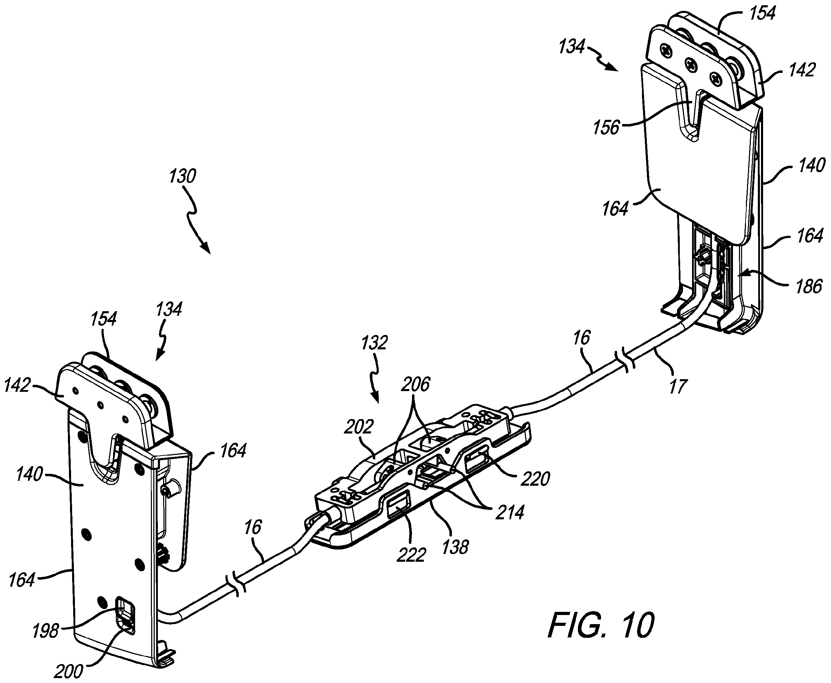

FIGS. 10-17 show anembodiment of a latch system 130. As shown in FIG. 10, generally, the latch system 130 includes a paddle button assembly 132, first and second latch assemblies 134 and first and second cables 16 extending between the paddle button assembly 132 and the first and second latch assemblies 134.

As shown in FIG. 10, the paddle button assembly 132 includes a button 138 that is movable between a home position and an actuation position (see FIGS. 14A and 14B), the first and second latch assemblies 134 includes a first hook assembly 140 and a first striker assembly 142, and the first and second cables 16 extend between the paddle button assembly 132 and the first and second latch assemblies 134.

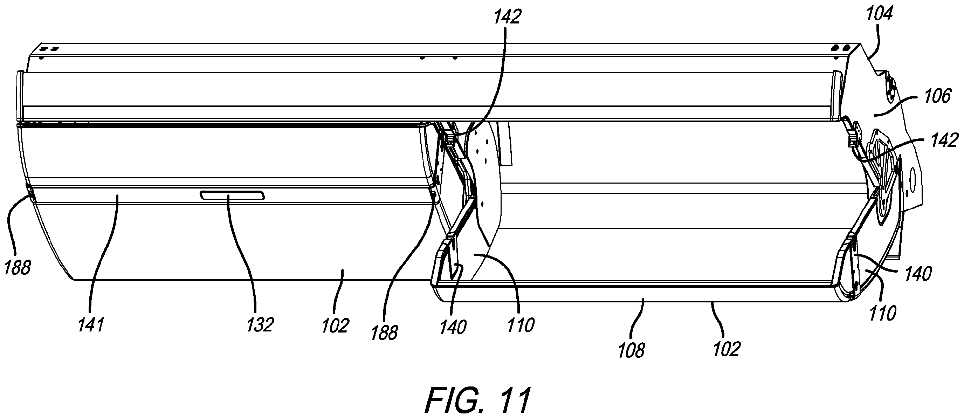

As shown in FIG. 11, in a preferred embodiment, the paddle button assembly 132 is associated with or mounted on or in the bucket 102. However, in another embodiment, the paddle button assembly 132 can be associated with or mounted on or in the upper housing. In a preferred embodiment, the first and second hook assemblies 140 are associated with one of the bucket 102 and the upper housing 104 and the first and second striker assemblies 142 are associated with the other of the bucket 102 and the upper housing 104. The drawings show the hook assemblies mounted in the side walls of the bucket and the striker assemblies mounted in and extending downwardly from the side panels of the upper housing. However, this arrangement can be reversed. In the embodiments shown in the drawings, the hook and striker assemblies are generally aligned with the side walls and side panels, which allows the clamshell type bin to close. However, in another embodiment, the hook and striker assemblies can be mounted on the inside or outside of the side walls or side panels. For example, if the latch system 130 was used with the pivot bin assembly taught in the '837 publication, the striker assemblies could be mounted on the inner surfaces the side panels of the stationary upper housing and the hook assemblies could be mounted on the outer surfaces of the side walls of the pivoting bin or vice versa.

Generally, movement of the button 138 from the home position (see FIG. 14A) to the actuation position (see FIG. 14B) moves the cables 16, thereby disengaging the hook assemblies 140 and the striker assemblies 142, and allowing the bucket to move from the closed position to the open position. This arrangement will be further described below.

As shown in FIG. 12, in a preferred embodiment, paddle button assembly 132 is mounted in an opening 112 defined in the bottom 108 of the bucket 102. The cables 16 extend through a channel 139 defined in the bottom 108 and sides 110 of the bucket 102. FIG. 12 shows the channel 139 extending along the outside bottom of the bucket away from the paddle button assembly 132. The channel 139 is preferably covered by a cover 141. The cables 16 extend in opposite directions from the paddle button assembly 132 and to the striker assemblies 142.

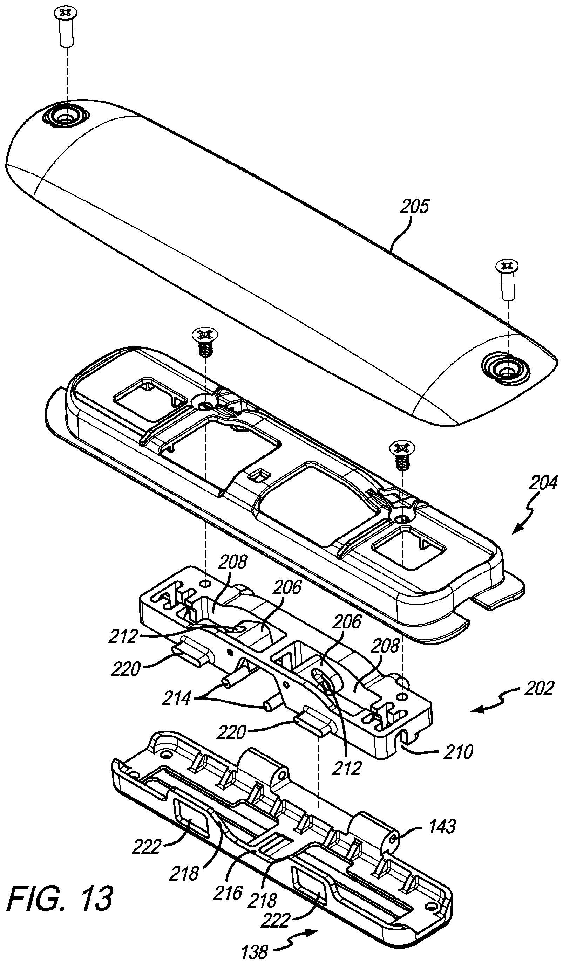

The paddle button assembly 132, which is best shown in FIGS. 13-14B, will now be described. Generally, the paddle button assembly 12 includes a frame 202, the button 138 and a casing 204 for attachment to the bucket 102. FIG. 13 also shows a cover 205 for covering the paddle button assembly 132 in the inside of the bucket. The frame 202 includes first and second cam levers or cam members 206 that pivot when the button 138 is pushed and that pull the cables 16. The button 138 is pivotally connected to the frame 202 (preferably by a pivot pin that extends through associated openings 143 in the frame 202 and button 138). The frame 202 includes channels 208 defined therein that receive the cam members 206 and in which the cam members 206 pivot. The cables 16 (not shown in FIG. 13) extend through openings 210 in the end of the frame 202. Balls 16b on the end of the cables 16 are received in an opening 212 in the cam members 206. The cam members 206 each include a cam post 214 extending outwardly therefrom. The cam posts 214 engage with a cam surface 216 on the button 138.

FIG. 14A demonstrates the home position, which, as described below is associated with the engaged position of the first trigger arm and, ultimately, the closed position of the bin. To open the bin, a user pushes on button 138, which, pivots to the actuation position (shown in FIG. 14B). In a preferred embodiment, the button 138 is biased toward the home position. This can be done by a spring. As a result of the configuration of the cam surface 216 and the cam posts 214, movement of the button 138 causes the cam posts 214 to move upwardly and inwardly on the cam surface 216 (as oriented in FIGS. 14A and 14B). This movement causes the cam members 206 to pivot from a first position (shown in FIG. 14 A) to a second position (shown in FIG. 14B). The cam members 206 pull the cables 16 (within casings 17), which ultimately disengages the hook assemblies 140 and the striker assemblies 142, which will be more fully described below. In another embodiment, the button 138 and cam member 206 are oriented to push the cable 16. It will be appreciated that the frame 202 and the button 138 each include inclined surfaces 218 that maintain the cam posts 214 in the desired position prior to and during operation.

In a preferred embodiment, the frame also includes stoppers 220 that cooperate with windows 222 in the button 138. The inner upper edge of the windows 222 contact the stoppers 220 in the first position to maintain the button 138 in the first or rest position. Similar to the first embodiment described herein, the cables can include the capability of being adjusted.

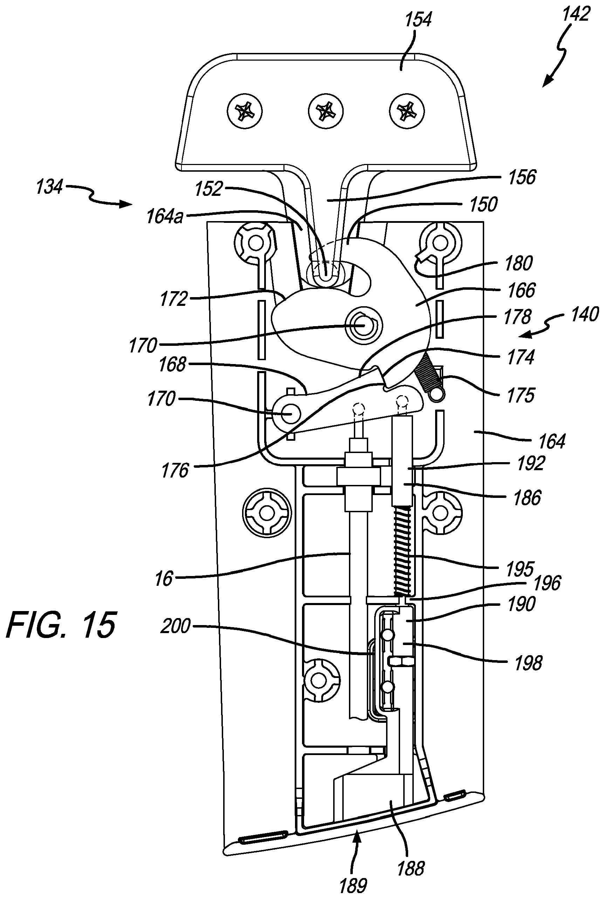

The latch assemblies 134, one of which is shown in FIGS. 15-17, will now be described. Generally, the hook assembly 140 includes a hook 150 that engages a striker 152 on the striker assembly 142. When the hook 150 and striker 152 are engaged, the bucket is in the closed position. When the hook 150 and striker 152 are disengaged (by actuation of the button 138), the bucket moves to the open position.

In a preferred embodiment, the striker assembly 142 includes a casing 154 that is secured to the upper housing 104 and includes a striker housing 156 extending downwardly therefrom. The striker 152 is associated with and secured in the striker housing 156.

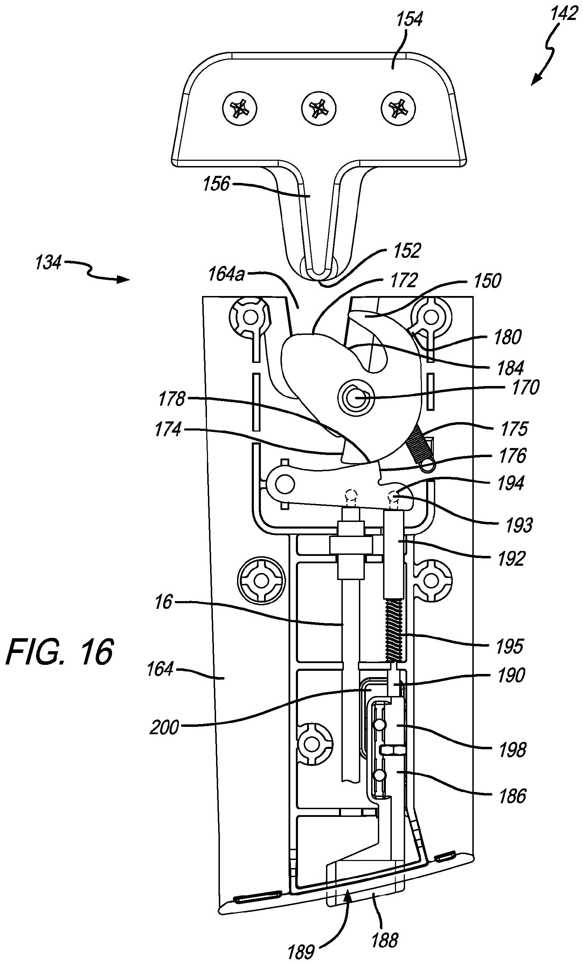

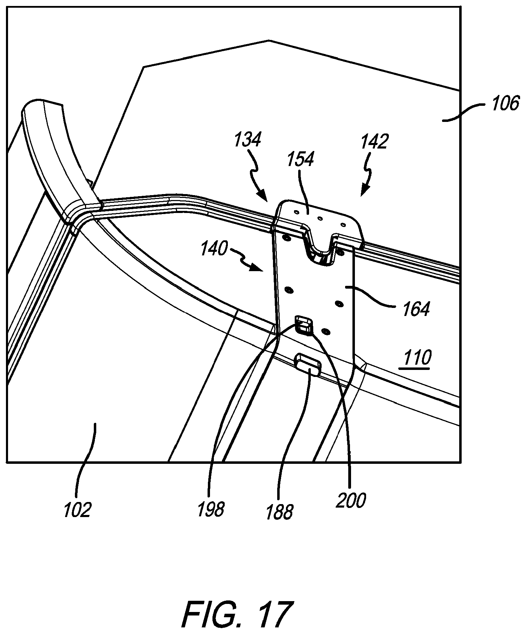

The hook assembly 140 includes a housing 164 that defines a housing interior that houses the other components. In a preferred embodiment, the housing 164 is received in an opening or indentation in the side wall 110 of the bucket 102 (see FIG. 17). The housing can include two sides that together house the hook 150 and associated components or a single side that cooperates with the side wall 110 of the bucket 102 to house the hook 150 and associated components. The housing 164 includes a striker opening 164a defined therein. Inside the housing 164, the hook assembly 140 includes a rotary member 166 and a pivotal trigger arm 168. The rotary member 166 is rotatably mounted on a pivot axle 170 and includes the hook 150, a closeout member 172 and a catch member 174. The rotary member 166 is rotatable between a first position (see FIG. 15) and a second position (see FIG. 16) and is biased toward the second position by a spring 175 (a torsion spring that is concentric with the pivot pin can also be used). The trigger arm 168 is pivotally mounted to a pivot axle 170 and includes a ledge 176 and a ramp portion 178. The trigger arm 168 is pivotal between an engaged position and a disengaged position and is biased toward the engaged position (preferably by a torsion spring that is concentric with the pivot pin or by the indicator assembly 186, described below).

As shown in FIG. 15, when the rotary member 166 is in the first position, the hook 150 is engaged with the striker 152 and the catch member 174 is engaged with the ledge 176 on the trigger arm 168. In this position, the hook 150 and striker 152 are engaged and the bucket is held in the closed position. When the cable 16 is pulled, as described above, the cable 16 pivots the trigger arm 168 downwardly to the disengaged position. In this position, the catch member 174 disengages from the ledge 176, and the rotary member 166 rotates to the second position (due to the bias by spring 175). In a preferred embodiment, in the second position, the rotary member 166 engages a stop member 180, thereby preventing further rotation of the rotary member 166. As is shown in FIG. 16, when the rotary member 166 is in the second position, the closeout member 172 is aligned with or positioned to close the striker opening 164a in the housing 164. It will be understood that this serves two purposes. First, it prevents objects from entering the housing. Second, it is part of the process for rotating the rotary member 166 back to the first position when the bucket is closed. In use, when the bucket is pivoted upwardly, the striker 152 enters the striker opening 164a and engages or contacts the closeout member 172. Because the closeout member 172 is offset from the pivot point of the rotary member 166, the engagement of the striker with the closeout member 172 causes the rotary member 166 to start to rotate toward the first position. The closeout member 172 includes a curved surface 184 that the striker 152 continues to push in to finish the rotation to the first position, thereby engaging the hook 150 with the striker 152.

As shown in FIGS. 15-16, the hook assembly 140 includes an indicator assembly 186 that is operatively connected to the trigger arm 168. The indicator assembly 186 includes an indicator 188 that extends through an opening 189 in the bottom of the housing 164, an arm 190 and a plunger 192 that includes a ball 193 on the end thereof that is received in a socket 194 defined in the trigger arm 168. Preferably, the arm 190 includes a spring 195 thereon that extends between the plunger 192 and a baffle 196 in the housing 164. The spring 195 biases the trigger arm 168 upwardly and the indicator 188 to a first position.

As shown in FIG. 15, when the trigger arm 168 is in the engaged position (equivalent to the hook being engaged with or latched to the striker), the indicator 188 is in the first position, thereby indicating that the hook 150 is engaged with the striker. In this position, the bottom surface of the indicator 188 is generally flush with the bottom of the housing 164. As shown in FIGS. 16 and 17, when the trigger arm 168 is in the disengaged position (equivalent to the hook being disengaged or unlatched from the striker), the trigger arm 168 pushes the plunger 192, arm 190 and indicator 188 downwardly and into a second position, thereby indicating that the hook 150 is disengaged from the striker. In this position, the indicator 188 extends downwardly through opening 189 so that it is visible to passengers or crew. Preferably, the indicator is colored red (or other color) to provide greater visibility. The indicator 188 can also include a light.

As shown in FIGS. 15-17, in a preferred example, the indicator assembly 186 also includes a manual override switch or member 198 that is positioned in and movable within a switch opening 200 in the housing 164. FIGS. 15-16 show the back side of the switch and FIG. 17 shows the front side. The manual override switch 198 is used if the bucket will not open using the button 138 (i. e., when moving the button does not cause the hook assembly to disengage from the striker assembly). In use, the manual override switch is moved from a first position (FIG. 15) to a second position (FIGS. 16 and 17) (e.g., it is moved generally downwardly), which pulls and pivots the trigger arm 68 to the disengaged position. In this position, the catch member 174 disengages from the ledge 176, and the rotary member 166 rotates to the second position (due to the bias), thereby disengaging the hook 150 from the striker 152. In another embodiment, the indicator can be omitted. In this embodiment, the indicator assembly is also referred to as an override assembly.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description of the Preferred Embodiments using the singular or plural number may also include the plural or singular number respectively. The word "or" in reference to a list of two or more items, covers all of the following interpretations of the word: any of the items in the list, all of the items in the list, and any combination of the items in the list.

The above-detailed description of embodiments of the disclosure is not intended to be exhaustive or to limit the teachings to the precise form disclosed above. While specific embodiments of and examples for the disclosure are described above for illustrative purposes, various modifications are possible within the scope of the disclosure, as those skilled in the relevant art will recognize, insofar as they fall within the scope of the appended claims. Further, any specific numbers noted herein are only examples: alternative implementations may employ differing values, measurements or ranges.

The teachings of the disclosure provided herein can be applied to other systems, not necessarily the system described above. The elements and acts of the various embodiments described above can be combined to provide further embodiments. Any measurements described or used herein are merely exemplary and not a limitation on the present invention. Other measurements can be used. Further, any specific materials noted herein are only examples: alternative implementations may employ differing materials.

Aspects of the disclosure can be modified, if necessary, to employ the systems, functions, and concepts of the various references described above to provide yet further embodiments of the disclosure.

These and other changes can be made to the disclosure in light of the above Detailed Description of the Preferred Embodiments. While the above description describes certain embodiments of the disclosure, and describes the best mode contemplated, no matter how detailed the above appears in text, the teachings can be practiced in many ways. Details of the system may vary considerably in its implementation details, while still being encompassed by the subject matter disclosed herein. As noted above, particular terminology used when describing certain features or aspects of the disclosure should not be taken to imply that the terminology is being redefined herein to be restricted to any specific characteristics, features or aspects of the disclosure with which that terminology is associated. In general, the terms used in the following claims should not be construed to limit the disclosures to the specific embodiments disclosed in the specification unless the above Detailed Description of the Preferred Embodiments section explicitly defines such terms.

Accordingly, although exemplary embodiments of the invention have been shown and described, it is to be understood that all the terms used herein are descriptive rather than limiting, and that many changes, modifications, and substitutions may be made by one having ordinary skill in the art without departing from the scope of the invention as defined by the claims.

## Claims

1. A latch system (130) comprising:
a paddle button assembly (132) that includes a button (138) that is movable between a home position and an actuation position,
a latch assembly (134) that includes a striker assembly (142) and a hook assembly (140), and a cable (16) that extends between the paddle button assembly and the latch assembly, wherein movement of the button from the home position to the actuation position moves the cable, thereby disengaging the hook assembly and striker assembly;
wherein the hook assembly includes a hook (150) and the striker assembly includes a striker (152), and wherein movement of the cable causes movement of one of the hook and the striker to disengage the hook assembly and the striker assembly;
wherein movement of the button pushes or pulls the cable, thereby pivoting a trigger arm (168) from an engaged position to a disengaged position and disengaging the hook from the striker;
**characterized in that**
the hook assembly includes an indicator (188) that is movable from a first position to a second position when the trigger arm is moved from the engaged position to the disengaged position;
wherein the indicator is enclosed in a housing (164), wherein the indicator extends outwardly from the housing when in the second position; and
wherein the housing is a hook assembly housing that defines a housing interior that houses the components of the hook assembly.

2. The latch system of claim 1 wherein the button (138) is pivotal between the home position and the actuation position, and wherein the pivoting of the button pushes or pulls the cable (16), thereby disengaging the hook assembly (140) and the striker assembly (142).

3. The latch system of claim 1 wherein the hook assembly (140) includes rotary member (166) that includes the hook (150), wherein the rotary member is movable between a first position where the hook is engaged with the striker (152) and a second position where the hook is not engaged with the striker.

4. The latch system of claim 3
wherein the rotary member (166) is biased toward the second position.

5. The latch system of claim 4
6- wherein the rotary member (166) includes a catch member (174) that engages a ledge (176) on the trigger arm (168) in the first position.

6. The latch system of claim 5
wherein the hook assembly (140) includes a stop member (180) and the rotary member (166) engages the stop member in the second position.

7. The latch system of claim 3
wherein the rotary member (166) is enclosed in a housing (164) and includes a closeout member (172), wherein the housing includes a striker opening (164a) defined in a top wall thereof, and wherein the closeout member is positioned to block the striker opening when the rotary member is in the second position.

8. The latch system of claim 1 wherein the button (138) is pivotal between the home position and the actuation position, and wherein pivoting of the button pivots a cam member (206) that pushes or pulls the cable (16), thereby disengaging the hook (150) from the striker (152).

9. The latch system of claim 8
wherein the cam member (206) includes a cam post (214) extending outwardly therefrom that engages a cam surface (216) on the button (138), and wherein the cam post moves along the cam surface when the button pivots from the home position to the actuation position.

10. The latch system of claim 1 wherein the hook assembly (140) includes rotary member (166) that includes the hook (150), wherein the rotary member is movable between a first position where the hook is engaged with the striker (152)and a second position where the hook is not engaged with the striker, wherein the rotary member includes a closeout member (172), and wherein the closeout member is positioned to block a striker opening (164a) when the rotary member is in the second position.

11. An aircraft storage bin (100) that comprises:
an upper housing (104) that includes first and second side panels (106),
a bucket (102) that cooperates with the upper housing to define a bin interior, wherein the bucket is movable with respect to the upper housing between an open position and a closed position, wherein the bucket includes a bottom (108) and first and second side walls (110), and
a latch system (130) according to any of claims 1 to 10
wherein the paddle button assembly (132) is associated with one of the bucket and the upper housing,
wherein the hook assembly (140) is associated with one of the bucket and the upper housing and the striker assembly (142) is associated with the other of the bucket and the upper housing, and
wherein said disengaging the hook assembly and the striker assembly permits the bucket to move from the closed position to the open position.

## Patentansprüche

1. Verriegelungssystem (130), das Folgendes umfasst:
eine Paddelknopf-Baugruppe (132), die einen Knopf (138) einschließt, der zwischen einer Grundstellung und einer Betätigungsstellung beweglich ist,
eine Verriegelungsbaugruppe (134), die eine Schließerbaugruppe (142) und eine Hakenbaugruppe (140) und ein Seil (16), das sich zwischen der Paddelknopf-Baugruppe und der Schließerbaugruppe erstreckt, einschließt, wobei eine Bewegung des Knopfs von der Grundstellung zu der Betätigungsstellung das Seil bewegt, wodurch die Hakenbaugruppe und die Schließerbaugruppe ausgerückt werden,
wobei die Hakenbaugruppe einen Haken (150) einschließt und die Schließerbaugruppe einen Schließer (152) einschließt und wobei eine Bewegung des Seils eine Bewegung eines von dem Haken und dem Schließer bewirkt, um die Hakenbaugruppe und die Schließerbaugruppe auszurücken,
wobei eine Bewegung des Knopfs das Seil schiebt oder zieht, wodurch ein Auslöserarm (168) von einer eingerückten Stellung zu einer ausgerückten Stellung bewegt wird und der Haken von dem Schließer ausgerückt wird,
**dadurch gekennzeichnet, dass**
die Hakenbaugruppe eine Anzeige (188) einschließt, die von einer ersten Stellung zu einer zweiten Stellung beweglich ist, wenn der Auslöserarm von der eingerückten Stellung zu der ausgerückten Stellung bewegt wird,
wobei die Anzeige in einem Gehäuse (164) eingeschlossen ist, wobei sich die Anzeige von dem Gehäuse aus nach außen erstreckt, wenn sie sich in der zweiten Stellung befindet, und
wobei das Gehäuse ein Hakenbaugruppengehäuse ist, das ein Gehäuseinneres definiert, das die Bestandteile der Hakenbaugruppe aufnimmt.

2. Verriegelungssystem nach Anspruch 1, wobei der Knopf (138) zwischen der Grundstellung und der Betätigungsstellung schwenkbar ist und wobei das Schwenken des Knopfs das Seil (16) schiebt oder zieht, wodurch die Hakenbaugruppe (140) und die Schließerbaugruppe (142) ausgerückt werden.

3. Verriegelungssystem nach Anspruch 1, wobei die Hakenbaugruppe (140) ein Drehelement (166) einschließt, das den Haken (150) einschließt, wobei das Drehelement zwischen einer ersten Stellung, in welcher der Haken mit dem Schließer (152) in Eingriff gebracht ist, und einer zweiten Stellung, in welcher der Haken nicht mit dem Schließer in Eingriff gebracht ist, beweglich ist.

4. Verriegelungssystem nach Anspruch 3, wobei das Drehelement (166) hin zu der zweiten Stellung vorgespannt ist.

5. Verriegelungssystem nach Anspruch 4, wobei das Drehelement (166) ein Fangelement (174) einschließt, das in der ersten Stellung eine Leiste (176) an dem Auslöserarm (168) in Eingriff nimmt.

6. Verriegelungssystem nach Anspruch 5, wobei die Hakenbaugruppe (140) ein Anschlagelement (180) einschließt und das Drehelement (166) in der zweiten Stellung das Anschlagelement in Eingriff nimmt.

7. Verriegelungssystem nach Anspruch 3, wobei das Drehelement (166) in einem Gehäuse (164) eingeschlossen ist und ein Abschlusselement (172) einschließt, wobei das Gehäuse eine Schließeröffnung (164a) einschließt, die in einer oberen Wand desselben geformt ist, und wobei das Abschlusselement so positioniert ist, dass es die Schließeröffnung sperrt, wenn sich das Drehelement in der zweiten Stellung befindet.

8. Verriegelungssystem nach Anspruch 1, wobei der Knopf (138) zwischen der Grundstellung und der Betätigungsstellung schwenkbar ist und wobei das Schwenken des Knopfs ein Nockenelement (206) schwenkt, welches das Seil (16) schiebt oder zieht, wodurch der Haken (150) von dem Schließer (152) ausgerückt wird.

9. Verriegelungssystem nach Anspruch 8, wobei das Nockenelement (206) einen Nockenstab (214) einschließt, der sich von demselben nach außen erstreckt, der eine Nockenfläche (216) an dem Knopf (138) in Eingriff nimmt, und wobei sich der Nockenstab entlang der Nockenfläche bewegt, wenn der Knopf von der Grundstellung zu der Betätigungsstellung schwenkt.

10. Verriegelungssystem nach Anspruch 1, wobei die Hakenbaugruppe (14) ein Drehelement (166) einschließt, das den Haken (150) einschließt, wobei das Drehelement zwischen einer ersten Stellung, in welcher der Haken mit dem Schließer (152) in Eingriff gebracht ist, und einer zweiten Stellung, in welcher der Haken nicht mit dem Schließer in Eingriff gebracht ist, beweglich ist, wobei das Drehelement ein Abschlusselement (172) einschließt und wobei das Abschlusselement so positioniert ist, dass es die Schließeröffnung (164a) sperrt, wenn sich das Drehelement in der zweiten Stellung befindet.

11. Flugzeug-Aufbewahrungsfach (100), das Folgendes umfasst:
ein oberes Gehäuse (104), das eine erste und eine zweite Seitentafel (106) einschließt,
einen Behälter (102), der mit dem oberen Gehäuse zusammenwirkt, um ein Fachinneres zu definieren, wobei der Behälter in Bezug auf das obere Gehäuse zwischen einer offenen Stellung und einer geschlossenen Stellung beweglich ist, wobei der Behälter einen Boden (108) und eine erste und eine zweite Seitenwand (110) einschließt, und
ein Verriegelungssystem nach einem der Ansprüche 1 bis 10, wobei die Paddelknopf-Baugruppe (132) mit einem von dem Behälter und dem oberen Gehäuse verknüpft ist,
wobei die Hakenbaugruppe (140) mit dem einen von dem Behälter und dem oberen Gehäuse verknüpft ist und die Schließerbaugruppe (142) mit dem anderen von dem Behälter und dem oberen Gehäuse verknüpft ist und
wobei das Ausrücken der Hakenbaugruppe und der Schließerbaugruppe ermöglicht, dass sich der Behälter von der geschlossenen Stellung zu der offenen Stellung bewegt.

## Revendications

1. Système de verrouillage (130) comprenant :
un ensemble bouton glissière (132) qui inclut un bouton (138) qui est mobile entre une position d'origine et une position d'actionnement,
un ensemble de verrouillage (134) qui inclut un ensemble gâche (142) et un ensemble crochet (140), et un câble (16) qui s'étend entre l'ensemble bouton glissière et l'ensemble de verrouillage, dans lequel le mouvement du bouton à partir de la position d'origine jusqu'à la position d'actionnement déplace le câble, désengageant ainsi l'ensemble crochet et l'ensemble gâche ;
dans lequel l'ensemble crochet inclut un crochet (150) et l'ensemble gâche inclut une gâche (152), et dans lequel un mouvement du câble provoque un mouvement d'un parmi le crochet et la gâche pour désengager l'ensemble crochet et l'ensemble gâche ;
dans lequel un mouvement du bouton pousse ou tire le câble, pivotant ainsi un bras déclencheur (168) à partir d'une position engagée vers une position désengagée et désengageant le crochet de la gâche ;
**caractérisé en ce que** l'ensemble crochet inclut un indicateur (188) qui est mobile à partir d'une première position jusqu'à une seconde position lorsque le bras déclencheur est déplacé à partir de la position engagée vers la position désengagée ;
dans lequel l'indicateur est enfermé dans un boîtier (164), dans lequel l'indicateur s'étend vers l'extérieur à partir du boîtier lorsqu'il est dans la seconde position ; et
dans lequel le boîtier est un boîtier d'ensemble crochet qui définit un intérieur de boîtier qui loge les composants de l'ensemble crochet.

2. Système de verrouillage selon la revendication 1, dans lequel le bouton (138) pivote entre la position d'origine et la position d'actionnement, et dans lequel le pivotement du bouton pousse ou tire le câble (16), désengageant ainsi l'ensemble crochet (140) et l'ensemble gâche (142).

3. Système de verrouillage selon la revendication 1, dans lequel l'ensemble crochet (140) inclut un élément rotatif (166) qui inclut le crochet (150), dans lequel l'élément rotatif est mobile entre une première position dans laquelle le crochet est engagé avec la gâche (152) et une seconde position dans laquelle le crochet n'est pas engagé avec la gâche.

4. Système de verrouillage selon la revendication 3, dans lequel l'élément rotatif (166) est sollicité vers la seconde position.

5. Système de verrouillage selon la revendication 4, dans lequel l'élément rotatif (166) inclut un élément de préhension (174) qui s'engage dans un rebord (176) sur le bras déclencheur (168) dans la première position.

6. Système de verrouillage selon la revendication 5, dans lequel l'ensemble crochet (140) inclut un élément d'arrêt (180) et l'élément rotatif (166) s'engage dans l'élément d'arrêt dans la seconde position.

7. Système de verrouillage selon la revendication 3, dans lequel l'élément rotatif (166) est enfermé dans un boîtier (164) et inclut un élément de fermeture (172), dans lequel le boîtier inclut une ouverture de gâche (164a) définie dans une paroi supérieure de celui-ci, et dans lequel l'élément de fermeture est positionné pour bloquer l'ouverture de gâche lorsque l'élément rotatif est dans la seconde position.

8. Système de verrouillage selon la revendication 1, dans lequel le bouton (138) pivote entre la position d'origine et la position d'actionnement, et dans lequel un pivotement du bouton pivote un élément à cames (206) qui pousse ou tire le câble (16), désengageant ainsi le crochet (150) de la gâche (152).

9. Système de verrouillage selon la revendication 8, dans lequel l'élément à came (206) inclut un montant de came (214) s'étendant vers l'extérieur à partir de celui-ci qui s'engage dans une surface de came (216) sur le bouton (138), et dans lequel le support de came se déplace le long de la surface de came lorsque le bouton pivote à partir de la position d'origine jusqu'à la position d'actionnement.

10. Système de verrouillage selon la revendication 1, dans lequel l'ensemble crochet (140) inclut un élément rotatif (166) qui inclut le crochet (150), dans lequel l'élément rotatif est mobile entre une première position où le crochet est engagé avec la gâche (152) et une seconde position où le crochet n'est pas engagé avec la gâche, dans lequel l'élément rotatif inclut un élément de fermeture (172), et dans lequel l'élément de fermeture est positionné pour bloquer une ouverture de gâche (164a) lorsque l'élément rotatif est dans la seconde position.

11. Compartiment de rangement d'aéronef (100) qui comprend :
un boîtier supérieur (104) qui inclut des premier et second panneaux latéraux (106),
un bac (102) qui coopère avec le boîtier supérieur pour définir un intérieur de compartiment, dans lequel le bac est mobile par rapport au boîtier supérieur entre une position ouverte et une position fermée, dans lequel le bac inclut un fond (108) et des première et seconde parois latérales (110), et
un système de verrouillage (130) selon l'une quelconque des revendications 1 à 10, dans lequel l'ensemble bouton glissière (132) est associé à l'un parmi le bac et le boîtier supérieur,
dans lequel l'ensemble crochet (140) est associé à l'un parmi le bac et le boîtier supérieur et l'ensemble gâche (142) est associé à l'autre parmi le bac et le boîtier supérieur, et
dans lequel ledit désengagement de l'ensemble crochet et de l'ensemble gâche permet au bac de se déplacer à partir de la position fermée vers la position ouverte.
